# EUROPÄISCHE PATENTSCHRIFT

(11) **EP 1 377 809 B1**
(45) Veröffentlichungstag und Bekanntmachung des Hinweises auf die Patenterteilung: **20.07.2011**
(21) Anmeldenummer: 02727414.1
(22) Anmeldetag: 14.03.2002
(51) Int. Cl.: G01M 3/20

(54) **Lecksuchgerät mit Prüfleck**
Leak indicator with test leak
Appareil de détection de fuite muni d'un dispositif à fuite d'essai

(30) Priorität: 11.04.2001 DE 10118085
(43) Veröffentlichungstag der Anmeldung: 07.01.2004
(73) Patentinhaber: Inficon GmbH, 50968 Köln (DE)
(72) Erfinder: BÖHM, Thomas, 50859 Köln (DE); GROSSE, Bley, Werner, 53125 Bonn (DE); ROLFF, Randolf, 50169 Kerpen-Horrem (DE)
(74) Vertreter: Selting, Günther
(86) Internationale Anmeldenummer: PCT/EP2002/002845
(87) Internationale Veröffentlichungsnummer: WO 2002/084246

(56) Entgegenhaltungen:
- EP-A- 0 444 434
- DE-A- 19 903 097
- FR-A- 2 767 197
- US-A- 2 979 937

## Beschreibung

Die Erfindung bezieht sich auf ein Lecksuchgerät mit den Merkmalen des Oberbegriffs des Patentanspruchs 1.

An viele Anlagen und Produkte in Industrie und Forschung werden hohe Anforderungen bezüglich ihrer Dichtheit gestellt. Von der Leckart, Leckrate oder Leckgröße hängt es ab, welches Lecksuchverfahren angewendet bzw. welches Lecksuchgerät eingesetzt wird.

Bei in der Kältemittel-, Automobil- oder anderen Industrien hergestellten Prüflingen oder Baugruppen wird häufig die Schnüffellecksuche eingesetzt. Diese setzt voraus, dass sich im Prüfling oder in der Baugruppe ein Testgas, vorzugsweise unter Überdruck, befindet. Als Testgas wird häufig Helium eingesetzt, das vor dem Verschließen der auf Lecks zu untersuchenden Hohlräume darin eingebracht wird. Bekannt ist auch der Einsatz der ohnehin in Prüflingen oder Baugruppen befindlichen Gase als Testgas, z. B. SF6 oder Halogen-Gase in der Kältemittelindustrie.

Der auf Lecks zu untersuchende Prüfling wird mit Hilfe der Ansaugstelle (Spitze) einer Schnüffelpistole abgetastet, die aus einem eventuell vorhandenen Leck ausströmendes Testgas aufnimmt und einem Testgasdetektor zuführt. Dieser kann sich zusammen mit den anderen Komponenten in einem Gerät befinden, mit dem die Schnüffelpistole u. a. über einen Schlauch in Verbindung steht. Ist der Detektor ausreichend klein (z. B. ein Infrarot-Gasanalysator), kann er auch in der Pistole selbst untergebracht sein, wodurch die Ansprechzeit maßgeblich verkürzt wird.

Testgas-Lecksuchgeräte müssen immer wieder kalibriert werden. Dazu ist der Einsatz von Prüflecks mit einem definierten Leck bekannt. Prüflecks für diese Zwecke umfassen einen Gasvorrat und eine Engstelle mit bekanntem Leitwert. Zur Kalibrierung eines Lecksuchgerätes mit einer Schnüffelpistole werden beispielsweise die Schnüffelspitze in die Nähe der Engstelle gebracht und die Leckanzeige abgeglichen.

Prüflecks sollen zum einen über eine möglichst lange Zeit (deutlich länger als ein Jahr) eine konstante Gasströmung haben und zum anderen so klein gebaut sein, dass sie im Gehäuse eines Lecksuchgerätes untergebracht werden können. Dieses setzt voraus, dass sich das Testgas unter hohem Druck (8 bar und mehr) im Prüfleck befindet. Prüflecks dieser Art sind temperatur-empfindlich. Dieses gilt insbesondere dann, wenn das Testgas bei den genannten Drücken flüssig ist. Eine maximale Temperatur darf aus Sicherheitsgründen nicht überschritten werden. Der Einbau eines Prüflecks dieser Art in ein Lecksuchgerät mit Wärme erzeugenden Komponenten ist mit Problemen verbunden.

Die Erfindung geht aus von einem Lecksuchgerät, wie es in der DE 199 03 097A1 beschrieben ist. Den Oberbegriff des Patentanspruch 1 entsprechend besitzt es ein Gehäuse, in dem sich mehr oder weniger Wärme erzeugende Komponenten sowie ein Prüfleck befinden. Das Prüfleck befindet sich u.a. oberhalb von zwei Vakuumpumpen, die zu den besonders viel Wärme abgebenden Gerätekomponenten gehören, so dass die Gefahr einer unerwünschten Einflussnahme auf die Temperatur des temperaturempfindlichen Prüflecks besteht.

Der vorliegenden Erfindung liegt die Aufgabe zu Grunde, das Prüfleck derart in das Gehäuse eines Lecksuchgerätes einzubauen, dass die Gefahr des Überschreitens maximal zulässiger Temperaturen nicht besteht.

Erfindungsgemäß wird diese Aufgabe eines sicheren Einbaus des Prüflecks im Gehäuse des Lecksuchgerätes durch die kennzeichnenden Merkmale der Patentansprüche gelöst. Durch diese Maßnahmen wird erreicht, dass das Prüfleck keine höheren Temperaturen annehmen kann als die Umgebungstemperatur. Die maximale Temperatur des Prüflecks ist dann gleichzeitig die maximal zulässige Betriebstemperatur des Lecksuchgerätes selbst.

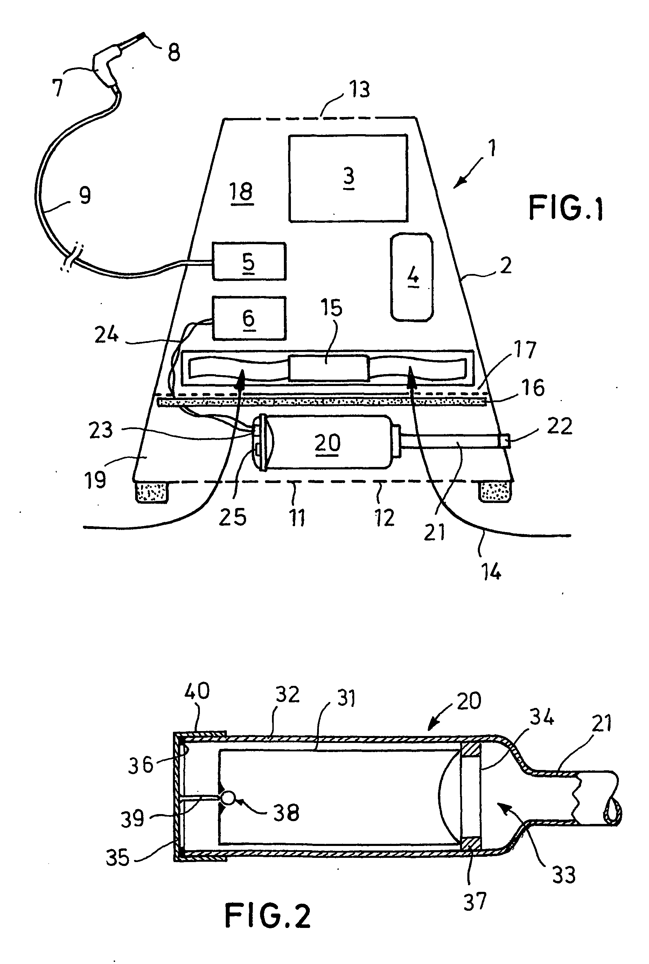

Weitere Vorteile und Einzelheiten der Erfindung sollen an Hand von in den Figuren 1 und 2 schematisch dargestellten Ausführungsbeispielen erläutert werden. Es zeigen
- Figur 1 ein Schnüffel-Lecksuchgerät nach der Erfindung mit darin eingebauten Komponenten und
- Figur 2 einen Schnitt durch ein Prüfleck nach der Erfindung.

Das in Figur 1 dargestellte Lecksuchgerät 1 besitzt ein Gehäuse 2, in dem sich die Geräte-Komponenten befinden. Als Blöcke dargestellt sind beispielsweise eine Vakuumpumpe 3, ein Netzteil 4, der Gasdetektor 5 und eine Steuerungseinheit 6. Außerhalb des Gehäuses befindet sich die Schnüffelpistole 7 mit ihrer Ansaugstelle (Spitze) 8. Sie ist über einen Schlauch 9 mit dem Gasdetektor 5 verbunden. Für den Fall, dass der Gasdetektor 5 in der Schnüffelpistole 7 untergebracht ist, steht diese mit der Steuereinheit über Signalleitungen in Verbindung.

Sämtliche Gerätekomponenten sind im oberen Teil des Gehäuses 2 untergebracht. Das Gehäuse 2 selbst ist im Bereich des Bodens 11 und im oberen Bereich mit Kühllufteintrittsöffnungen 12 bzw. Luftschlitzen 13 ausgerüstet. Da zumindest ein Teil der Gerätekomponenten Wärme erzeugen, findet bereits ein durch Thermik erzeugter Kühlluftstrom (Pfeile 14) statt. Sollte dieser nicht ausreichen, kann zusätzlich ein den Kühlluftstrom unterstützender Ventilator 15 vorgesehen sein. Beim dargestellten Ausführungsbeispiel befindet er sich unterhalb der Gerätekomponenten. Mit 16 ist eine Filtermatte bezeichnet, mit deren Hilfe die angesaugte Kühlluft gereinigt wird. Oberhalb der Filtermatte 16 befindet sich eine mit Luftdurchtrittsöffnungen ausgerüstete Trennebene 17, die den Gehäuseteilraum 18 mit den Gerätekomponenten 3 bis 6 nach unten begrenzt.

Mit 20 ist das im Lecksuchgerät 1 untergebrachte Prüfleck bezeichnet. Es befindet sich unterhalb der Trennebene 17, so dass es sich in einem thermisch vom Gehäuseteilraum 18 isolierten Gehäuseteilraum 19 befindet. Es ist ständig von frischer Kühlluft umströmt. Die Trennebene 17, die unmittelbar oberhalb des Prüflecks 20 keine Durchtrittsöffnungen aufweist, sowie die Filtermatte 16 unterstützen die thermische Isolierung des Gehäuseteilraumes 19 vom Teilraum 18. Das Prüfleck 20 kann maximal die Temperatur der Umgebungsluft annehmen.

Das Testleck 20 weist einen Rohranschluß 21 auf, der durch das Gehäuse 2 nach außen hindurchtritt. Der Rohranschluß 21 bildet eine üblicherweise ständig offene Verbindung zwischen der in Figur 1 nicht dargestellten Engstelle des Lecksuchgerätes 20 und einer für die Einführung der Schnüffelspitze 7 geeigneten Öffnung 22. Diese Anordnung ermöglicht jederzeit die Kalibrierung der Leckanzeige.

Besonders zweckmäßig ist es, ein für den Einbau in ein Lecksuchgerät 1 geeignetes Prüfleck 20 mit einem Gasvorrat 31 und einer Engstelle 33, - z. B. in der Nähe seiner Engstelle - mit einem Temperatursensor 23 auszurüsten, der mit der Steuereinheit 6 in Verbindung steht (Leitungen 24). Diese Maßnahmen erlauben es, die temperaturabhängige Durchlässigkeit der Engstelle des Testlecks 20 bei der Kalibrierung der Leckanzeige zu berücksichtigen. Insbesondere bei Prüflecks mit einer Membran als Engstelle ist diese Berücksichtigung von Bedeutung, da die Durchlässigkeit der Membran exponentiell temperaturabhängig ist.

Um nun eine sichere Kalibrierung des Lecksuchers zu erreichen, wird die Temperaturabhängigkeit des Testlecks durch eine in der Software des Geräts (Steuereinheit 6) abgelegte Korrekturkurve kompensiert. Die Temperatur wird im Bereich des Testlecks gemessen. Dazu befindet sich am Boden des Testlecks eine Platine mit dem Temperatursensor und einem EEPROM. In Figur 1 ist das EEPROM schematisch angedeutet und mit 25 bezeichnet.

Der Vorteil des beschriebenen Konzeptes besteht darin, dass damit kostengünstig ein kompaktes Testleck zur Integration in kleine Tischgeräte produziert werden kann. Da im EEPROM Produktionsdatum, Füllmenge sowie Leckrate abgespeichert sind, kann daraus der Zeitpunkt abgeschätzt werden, wann das Reservoir sich geleert hat und das Testleck daher ausgetauscht werden muss.

Figur 2 zeigt ein für den Einbau in ein Lecksuchgerät nach Figur 1 besonders geeignetes Prüfleck 20. Es umfasst einen inneren Druckbehälter 31 mit dem Gasvorrat. Dabei handelt es sich um eine handelsübliche Druckdose, die das gewünschte Testgas in flüssiger Form enthält. Der Druck in gefüllten Kartuschen dieser Art ist stark temperaturabhängig. Er darf üblicherweise 8 bar (Prüfdruck 12 bar) nicht überschreiten. Die maximale Temperatur, die Druckdosen dieser Art üblicherweise annehmen dürfen, ist auf 50° C begrenzt.

Um dennoch Druckgehälter dieser Art auch bei zeitweise höheren Umgebungstemperaturen als Gasvorrat bei Prüflecks einsetzen zu können, ist ein zweites äußeres Gehäuse 32 vorgesehen. Es besteht beispielsweise aus Stahl und ist für wesentlich höhere Drücke als 8 (bzw. 12) bar ausgelegt. Es weist im Bereich einer Stirnseite die Engstelle 33 auf, die als Membran 34 ausgebildet ist. Daran schließt sich der bereits zur Figur 1 beschriebene Rohranschluß 21 an. Im Bereich der anderen Stirnseite ist eine lösbare, vorzugsweise abschraubbare Kappe 35 vorgesehen. Sie ermöglicht es, das lösbare Gehäuse 32 dicht zu verschließen. Zwischen seiner stirnseitigen Öffnung und der Kappe 35 befindet sich ein Dichtring 36. Nach dem Abnehmen der Kappe 35 ist das Innere des Gehäuses 32 für Einsatz oder Entnahme des Druckbehälters 31 zugänglich.

Im Bereich der der Kappe 35 gegenüberliegenden Stirnseite ist das Gehäuse 32 mit einem nach innen ragenden Flansch 37 ausgerüstet. Dieser Flansch trägt auf seiner dem Rohranschluß 21 zugewandten Seite die Membran 34. Auf der der Kappe 35 zugewandten Seite des Flansches 37 stützt sich der in das Gehäuse 32 eingesetzte Druckbehälter 31 ab.

Beim dem in Figur 2 dargestellten Ausführungsbeispiel ist der Druckbehälter 31 mit einem Kugelventil 38 ausgerüstet, das sich in einer seiner Stirnseiten befindet. Der Druckbehälter 31 wird derart in das Gehäuse 32 eingesetzt, dass das Ventil 38 der Kappe 35 zugewandt ist. Die Kappe 35 ist mit einem dem Ventil 38 zugeordneten Stift 39 ausgerüstet, dessen Länge so gewählt ist, dass er das Ventil 38 bei vollständig aufgeschraubter Kappe 35 öffnet. Wird ein Druckbehälter ohne Ventil 38 verwendet, ist an Stelle des Stiftes 39 ein Dorn vorgesehen, der den Druckbehälter 31 mit dem Verschließen der Kappe 35 mit einer Öffnung versieht. Nach dem Verschließen der Kappe ist entweder das Ventil 38 offen oder die vom Dorn hergestellte Öffnung vorhanden, so daß das Testgas in das Gehäuse 32 strömt. Maßgebend für die Temperaturbelastung ist dann nicht mehr der Druckbehälter 31 sondern das Gehäuse 32.

Ist ein Auswechseln des Druckbehälters 31 erforderlich, wird das Gehäuse 32 durch Abschrauben der Kappe 35 geöffnet. Der Rand der Kappe ist in der Nähe seiner Oberseite mit einer kleinen Bohrung 40 ausgerüstet. Diese erlaubt es, dass vor dem endgültigen Abschrauben der Kappe 35 ein Druckausgleich zwischen dem Inneren des Gehäuses 32 und der Umgebung stattfindet.

Der besondere Vorteil des erfindungsgemäßen Prüflecks besteht darin, dass das druckstabile Gehäuse 32 nicht gewechselt werden muß. Es kann in Bezug auf seine Stabilität den gewünschten Anforderungen entsprechend ausgebildet sein. Nur beim Transport und bei der Lagerung des Druckbehälters 31 müssen die relativ niedrigen Umgebungstemperaturen beachtet werden. Auch die Engstelle (Membran 34) selbst gehört nicht zu einem Wegwerfprodukt. Damit ist der Vorteil verbunden, dass sich die Prüfleck-Leckrate beim Wechseln des Gasvorrates nicht ändert.

Ein optimaler Schutz des Prüflecks tritt hinzu, wenn es entsprechend der Erfindung in ein Lecksuchgerät eingebaut wird. Die Kühlluftführung für das Gerät über das Prüfleck stellt als maximale Temperatur die Umgebungstemperatur im Bereich des Prüflecks sicher.

## Patentansprüche

1. Lecksuchgerät (1) mit einem Gehäuse (2), in dem Gerätekomponenten, wie Vakuumpumpe (3), Netzteil (4), Gasdetektor (5) und Steuereinheit (6), sowie ein Prüfleck (20) untergebracht sind, und bei dem das Gehäuse (2) im Bereich des Bodens (11) und im oberen Bereich mit Kühlluftdurchtrittsöffnungen (12, 13) ausgerüstet ist, **dadurch gekennzeichnet, dass** das Prüfleck (20) unterhalb der Gerätekomponenten (3 bis 6) angeordnet ist und dass das Gehäuse (2) von unten nach oben von Kühlluft durchströmt ist.

2. Gerät nach Anspruch 1, **dadurch gekennzeichnet, dass** zur Unterstützung der Kühlluftströmung ein Ventilator (15) vorgesehen ist.

3. Gerät nach Anspruch 1 oder 2, **dadurch gekennzeichnet, dass** eine mit Durchtrittsöffnungen ausgerüstete Gehäusetrennwand (17) vorgesehen ist, die einen oberen Gehäuseteilraum (18) von einem unteren Gehäuseteilraum (19) trennt, dass sich im oberen Gehäuseteilraum (18) die Gerätekomponenten (3 bis 6) befinden und dass sich im unteren Gehäuseteilraum das Prüfleck (20) befindet.

4. Gerät nach Anspruch 3, **dadurch gekennzeichnet, dass** sich im Bereich der Trennwand (17) eine Filtermatte (16) befindet.

5. Gerät nach Anspruch 3 oder 4, **dadurch gekennzeichnet, dass** die Trennebene (17) unmittelbar oberhalb des Prüflecks (20) keine Durchtrittsöffnungen aufweist.

6. Gerät nach einem der Ansprüche 1 bis 5, **dadurch gekennzeichnet, dass** das Prüfleck (20) einen Gasvorrat besitzt und mit einer Engstelle (33) ausgerüstet ist.

7. Gerät nach Anspruch 6, **dadurch gekennzeichnet, dass** sich der Gasvorrat des Prüflecks (20) in einem Druckbehälter (31) befindet, dass ein den Druckbehälter (31) aufnehmendes Gehäuse (32) vorgesehen ist und dass die Engstelle (33) Bestandteil des Gehäuses (32) ist.

8. Gerät nach Anspruch 7, **dadurch gekennzeichnet, dass** Druckbehälter (31) und Gehäuse (32) zylindrisch sind, dass sich die Engstelle (33) im Bereich einer der beiden Stirnseiten des Gehäuses (32) befindet und dass die der Engstelle (33) gegenüberliegende Stirnseite des Gehäuses (32) mit einer lösbaren, vorzugsweise abschraubbaren Kappe (35) ausgerüstet ist.

9. Gerät nach Anspruch 8, **dadurch gekennzeichnet, dass** das Gehäuse (32) im Bereich der der Kappe (35) gegenüberliegenden Stirnseite mit einem nach innen ragenden Flansch (37) ausgerüstet ist, auf dem sich der den Gasvorrat enthaltende Druckbehälter (31) abstützt.

10. Gerät nach Anspruch 8 oder 9, **dadurch gekennzeichnet, dass** der Druckbehälter (31) im Bereich der Kappe (35) mit einem Kugelventil (38) ausgerüstet ist und dass die Kappe (35) einen Stift (39) trägt, der das Ventil (38) bei aufgeschraubter Kappe (35) öffnet.

11. Gerät nach Anspruch 8 oder 9, **dadurch gekennzeichnet, dass** die Kappe (35) einen nach innen gerichteten Dorn trägt, der bei aufgeschraubter Kappe (35) den Druckbehälter (31) durchstößt.

12. Gerät nach Anspruch 8, 9, 10 oder 11, **dadurch gekennzeichnet, dass** der Rand der Kappe (35) im Bereich seiner Oberseite mit einer Bohrung (40) ausgerüstet ist.

13. Gerät nach einem der Ansprüche 6 bis 12, **dadurch gekennzeichnet, dass** die Engstelle (33) eine Membran (34) ist.

14. Gerät nach Anspruch 9 und Anspruch 14, **dadurch gekennzeichnet, dass** der Flansch (37) die Membran (34) trägt.

15. Gerät nach einem der Ansprüche 1 bis 14, **dadurch gekennzeichnet, dass** es als Schnüffellecksuchgerät ausgebildet ist und dass eine Schnüffelpistole (7) mit im Gehäuse (2) angeordneten Gerätekomponenten in Verbindung steht.

16. Gerät nach Anspruch 15, **dadurch gekennzeichnet, dass** das Prüfleck (20) mit einem Rohranschluss (21) ausgerüstet ist, der durch das Gehäuse (2) nach außen tritt und eine für die Einführung der Ansaugstelle (8) der Schnüffelpistole (7) geeignete Öffnung (22) aufweist.

17. Gerät nach Anspruch 1 und Anspruch 15 oder 16, **dadurch gekennzeichnet, dass** der Gasdetektor (5) in der Schnüffelpistole (7) untergebracht ist.

18. Gerät nach Ansprüche 1 bis 17, **dadurch gekennzeichnet, dass** das Prüfleck (20) mit einem Temperatursensor (23) ausgerüstet ist, der mit der Steuereinheit (6) in Verbindung steht.

19. Gerät nach einem der Ansprüche 1 bis 18, **dadurch gekennzeichnet, dass** es weiterhin mit einem EEPROM ausgerüstet ist, in dem Produktionsdatum, Füllmenge und/oder Leckrate abgespeichert sind.

## Claims

1. Leak indicator device (1) comprising a housing (2) which houses components of the indicator, such as a vacuum pump (3), a power supply (4), a gas detector (5) and a control unit (6), as well as a test leak (20), and wherein the housing (2) is provided with cooling air penetration openings (12, 13) in its bottom portion (11) and its top portion, **characterized in that** the test leak (20) is located below the instrument components (3 to 6) and that the cooling air flows through the housing (2) from the bottom to the top.

2. Device according to claim 1, **characterized in that** for the purpose of supporting the cooling air flow, a fan (15) is provided.

3. Device according to claim 1 or 2, **characterized in that** a separating wall (17), equipped with penetration openings, is provided in the housing, which wall separates an upper partial section (18) of the housing from a lower partial section (19) of the housing, that within the upper partial section (18) of the housing the instrument components (3 to 6) are located, and that the test leak (20) is located in the bottom partial section of the housing.

4. Device according to claim 3, **characterized in that** there is located in the area of the separating wall (17) a filter mat (16).

5. Device according to one of the claims 3 or 4, **characterized in that** the separating plane (17) has no penetration openings immediately above the test leak (20).

6. Device according to one of claims 1 to 5, **characterized in that** said test leak (20) has a gas reservoir and is provided with a constriction (33).

7. Device according to claim 6, **characterized in that** the gas reservoir of the test leak (20) is located in a pressure vessel (31), that a housing (32) is provided for accommodating the pressure vessel (31), and that the constriction (33) is part of the housing (32).

8. Device according to claim 7, **characterized in that** the pressure vessel (31) and the housing (32) are cylindrical in shape, that the constriction (33) is located in the area of one of the face sides of the housing (32), and that the face side of the housing (32) opposite the constriction (33) is equipped with a releasable cap (35) which may preferably be unscrewed.

9. Device according to claim 8, **characterized in that** the housing (32) is equipped in the area of the face side opposing the cap (35) with a flange (37) projecting towards the inside, which supports the pressure vessel (31) containing the gas reservoir.

10. Device according to claim 8 or 9, **characterized in that** the pressure vessel (31) is equipped in the area of the cap (35) with a ball valve (38) and that the cap (35) carries a pin (39) which opens the valve (38) when the cap (35) is screwed on.

11. Device according to claim 8 or 9, **characterized in that** the cap (35) carries a spike oriented towards the inside, which, with the cap (35) screwed on, penetrates the pressure vessel (31).

12. Device according to claim 8, 9, 10 or 11, **characterized in that** the rim of the cap (35) is equipped in the area of its upper side with a bore (40).

13. Device according to one of the claims 6 to 12, **characterized in that** the constriction (33) is a diaphragm (34).

14. Device according to claim 9 and claim 14, **characterized in that** the flange (37) carries the diaphragm (34).

15. Device according to one of the claims 1 to 14, **characterized in that** it is designed as a sniffer leak indicator and that a sniffer gun (7) is linked to device components accommodated in the housing (2).

16. Device according to claim 15, **characterized in that** the test leak (20) is equipped with a pipe connection (21) projecting through the housing (2) to the outside and having an opening (22) suited for introducing the intake point (8) of the sniffer gun (7).

17. Device according to claim 1 and claim 15 or 16, **characterized in that** the test gas detector (5) is accommodated within the sniffer gun (7).

18. Device according to one of the claims 1 to 17, **characterized in that** there is assigned to the test leak (20) a temperature sensor (23) which is linked to the control unit (6).

19. Device according to one of the claims 1 to 18, **characterized in that** it is, moreover, equipped with an EEPROM, in which production date, filling quantity and/or leak rate have been saved.

## Revendications

1. Appareil de détection de fuite (1) comprenant un boitier (2) dans lequel sont accommodés des éléments dudit appareils, à savoir la pompe à vide (3), l'alimentation électrique (4), le détecteur de gaz (5) et l'unité de commande (6), aussi bien qu'un dispositif à fuite d'essai (20), et dans lequel le boitier (2) est muni, dans la région du fond (11) et dans la région supérieure, d'ouvertures de passage d'air de refroidissement (12, 13), **caractérisé en ce que** ledit dispositif à fuite d'essai (20) est disposé au-dessous des éléments (3 à 6) dudit appareil, et que ledit boitier (2) est traversé de bas en haut par l'air de refroidissement.

2. Appareil selon la revendication 1, **caractérisé en ce qu'**un ventilateur (15) est prévu pour soutenir l'écoulement d'air de refroidissement.

3. Appareil selon la revendication 1 ou 2, **caractérisé en ce qu'**un cloison de séparation de boitier (17) est prévu qui est muni d'ouvertures de passage, ledit cloison séparant un espace partiel supérieur (18) du boitier d'un espace partiel inférieur (19) du boitier, que les éléments (3 à 6) dudit appareil sont situés dans ledit espace partiel supérieur (18) du boitier, et que ledit dispositif à fuite d'essai (20) est disposé dans ledit espace partiel inférieur dudit boitier.

4. Appareil selon la revendication 3, **caractérisé en ce que** dans la région dudit cloison (17) une natte de filtrage (16) est située.

5. Appareil selon les revendications 3 ou 4, **caractérisé en ce que** le plan de séparation (17) ne présente aucune ouverture de passage directement au-dessus du dispositif à fuite d'essai (20).

6. Appareil selon l'une quelconque des revendications 1 à 5, **caractérisé en ce que** ledit dispositif à fuite d'essai (20) comprend un réservoir de gaz et est muni d'un étranglement (33).

7. Appareil selon la revendication 6, **caractérisé en ce que** le réservoir de gaz dudit dispositif à fuite d'essai (20) est situé dans un récipient à pression (31), qu'un boitier (32) est prévu pour accommoder ledit récipient à pression (31), et que ledit étranglement (33) fait partie dudit boitier (32).

8. Appareil selon la revendication 7, **caractérisé en ce que** ledit récipient à pression (31) et ledit boitier (32) sont cylindrique, que ledit étranglement (33) est situé dans la région d'un des deux côtés de front dudit boitier (32), et que le côté de front du boitier (32) opposé à l'étranglement (33) est muni d'un capuchon (35) amovible, de préférence dévissable.

9. Appareil selon la revendication 8, **caractérisé en ce que**, dans la région du côté de front opposé au capuchon (35), ledit boitier (32) est muni d'une flasque (37) saillant vers l'intérieur, sur lequel s'appuie ledit récipient à pression (31) contenant ledit réservoir de gaz.

10. Appareil selon la revendication 8 ou 9, **caractérisé en ce que** ledit récipient à pression (31) est muni d'une soupape sphérique (38) dans la région dudit capuchon (35), et que ledit capuchon (35) porte une goupille (39) qui ouvre ladite soupape (38) lors du vissage du capuchon (35).

11. Appareil selon les revendications 8 ou 9, **caractérisé en ce que** ledit capuchon (35) porte une broche orientée vers l'intérieur, ladite broche pénétrant ledit récipient à pression (31) en état vissé dudit capuchon (35).

12. Appareil selon la revendication 8, 9, 10 ou 11, **caractérisé en ce que** le bord du capuchon (35) est prévu d'un alésage (40) dans la région de sa face supérieure.

13. Appareil selon l'une quelconque des revendications 6 à 12, **caractérisé en ce que** ledit étranglement (33) est une membrane (34).

14. Appareil selon la revendication 9 et la revendication 14, **caractérisé en ce que** ladite flasque (37) porte ladite membrane (34).

15. Appareil selon l'une quelconque des revendications 1 à 14, **caractérisé en ce qu'**il est réalisé comme détecteur renifleur de fuites, et qu'un pistolet renifleur (7) est en communication avec des éléments dudit appareil situés dans ledit boitier (2).

16. Appareil selon la revendication 15, **caractérisé en ce que** ledit dispositif à fuite d'essai (20) est muni d'un raccord de tube (21) traversant ledit boitier (2) pour s'étendre en dehors, et comprend une ouverture (22) apte à introduire la partie d'aspiration (8) dudit pistolet renifleur (7).

17. Appareil selon la revendication 1 et la revendication 15 ou 16, **caractérisé en ce que** le détecteur de gaz (5) est logé dans ledit pistolet renifleur (7).

18. Appareil selon l'une quelconque des revendications 1 à 17, **caractérisé en ce que** ledit dispositif à fuite d'essai (20) est muni d'un capteur de température (23) lié à ladite unité de commande (6).

19. Appareil selon l'une quelconque des revendications 1 à 18, **caractérisé en ce qu'**il est en outre prévu d'un EEPROM dans lequel sont stockés la date de fabrication, la contenance et/ou le taux de fuite.
